# EUROPEAN PATENT APPLICATION

(11) **EP 4 477 542 A1**
(43) Date of publication of application: **18.12.2024**
(21) Application number: 24181820.2
(22) Date of filing: 12.06.2024
(51) Int. Cl.: B64D 9/00

(54) **CARGO SYSTEM WIRELESS ADAPTER**

(30) Priority: 13.06.2023 US 202318334116
(71) Applicant: Goodrich Corporation, Charlotte, NC 28217-4578 (US)
(72) Inventor: SETTERSTROM, Kevin, Jamestown, ND, 58401 (US); KOTTSICK, Andrew, West Fargo, ND, 58078 (US); FASZHOLZ, Alan L., Jamestown, ND, 58401 (US); MORRELL, Brennen, Jamestown, ND, 58401 (US)
(74) Representative: Dehns

(57) **Abstract**

A cargo handling system that utilizes a wireless adapter is provided. The cargo handling system includes a plurality of power drive units (PDUs) (110), a system controller (130) in communication with each of the plurality of PDUs, a wireless adapter (200) coupled to the system controller, and a wireless cargo handling control device (204) wirelessly coupled to the system controller via the wireless adapter and configured to control each of the plurality of PDUs.

## Description

### FIELD

The present disclosure relates to cargo handling systems, and more specifically, to a cargo system wireless adapter for controlling cargo handling systems.

### BACKGROUND

Today's rapidly evolving and uncertain world has driven the need for increased flexibility and modularity into modern aircraft cargo handling systems. Typical cargo handling systems utilize physical control panels the are electrically and mechanically coupled to a structure within the aircraft's cargo area. While there is interest for cargo handling systems to provide a wireless solution to both cargo control systems as well as cargo maintenance systems, typical cargo control systems still include some variation of previous legacy control interfaces, for redundancy purposes, even while maturing to wireless technology. The existence of these legacy control interfaces may cause unnecessary extra weight due to the redundancy in cargo handling systems.

### SUMMARY

A cargo handling system is disclosed. The cargo handling system includes a plurality of power drive units (PDUs), a system controller in communication with each of the plurality of PDUs, a wireless adapter coupled to the system controller, and a wireless cargo handling control device wirelessly coupled to the system controller via the wireless adapter and configured to control each of the plurality of PDUs.

In various embodiments, the wireless adapter is coupled to the system controller via an expansion port. In various embodiments, the wireless adapter utilizes a non-standard connector to couple to the expansion port and wherein the non-standard connector is proprietary. In various embodiments, the wireless adapter comprises a set of wireless connection indicators configured to indicate wireless connection status and wireless connection strength. In various embodiments, the wireless adapter comprises a set of system status indicators that identify at least one of system connectivity, built-in test equipment information, or system errors.

In various embodiments, the wireless adapter comprises a wired partition configured to interface with the system controller and a wireless partition configured to interface with the wireless cargo handling control device. In various embodiments, the wireless adapter comprises near field communication (NFC) circuitry configured to pass and receive information with the wireless cargo handling control device. In various embodiments, the wireless adapter comprises a display configured to display at least one of passcodes, network identifiers, web URLs, system connectivity, built-in test equipment information, or system errors.

In various embodiments, the wireless adapter is a first wireless adapter, and the first wireless adapter is coupled to the system controller via a first expansion port. In various embodiments, the cargo handling system further includes a second wireless adapter, and the second wireless adapter is coupled to the system controller via a second expansion port and wherein the wireless cargo handling control device wirelessly is coupled to the system controller via either the first wireless adapter or the second wireless adapter to control each of the plurality of PDUs.

In various embodiments, the wireless adapter utilizes at least one of Wi-Fi, Bluetooth, Zigbee, Thread, or infrared spectrum requiring Line-Of-Sight communication.

Also disclosed herein is an aircraft. The aircraft includes a cargo deck and a cargo handling system disposed within the cargo deck. The cargo handling system includes a plurality of power drive units (PDUs), a system controller in communication with each of the plurality of PDUs, a wireless adapter coupled to the system controller, and a wireless cargo handling control device wirelessly coupled to the system controller via the wireless adapter and configured to control each of the plurality of PDUs.

In various embodiments, the wireless adapter is coupled to the system controller via an expansion port. In various embodiments, the wireless adapter utilizes a non-standard connector to couple to the expansion port and wherein the non-standard connector is proprietary. In various embodiments, the wireless adapter comprises a set of wireless connection indicators configured to indicate wireless connection status and wireless connection strength. In various embodiments, the wireless adapter comprises a set of system status indicators that identify at least one of system connectivity, built-in test equipment information, or system errors.

In various embodiments, the wireless adapter comprises a wired partition configured to interface with the system controller and a wireless partition configured to interface with the wireless cargo handling control device. In various embodiments, the wireless adapter comprises near field communication (NFC) circuitry configured to pass and receive information with the wireless cargo handling control device. In various embodiments, the wireless adapter comprises a display configured to display at least one of passcodes, network identifiers, web URLs, system connectivity, built-in test equipment information, or system errors.

In various embodiments, the wireless adapter is a first wireless adapter, and the first wireless adapter is coupled to the system controller via a first expansion port. In various embodiments, the cargo handling system further includes a second wireless adapter, and the second wireless adapter is coupled to the system controller via a second expansion port and wherein the wireless cargo handling control device wirelessly is coupled to the system controller via either the first wireless adapter or the second wireless adapter to control each of the plurality of PDUs.

In various embodiments, the wireless adapter utilizes at least one of Wi-Fi, Bluetooth, Zigbee, Thread, or infrared spectrum requiring Line-Of-Sight communication.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a schematic view of an aircraft being loaded with cargo, in accordance with various embodiments.
FIG. 1B illustrates a portion of a cargo handling system, in accordance with various embodiments.
FIG. 2 illustrates a cargo system wireless adapter utilized within a cargo compartment, in accordance with various embodiments.
FIGS. 3A and 3B illustrate a cargo system wireless adapter, in accordance with various embodiments.
FIG. 4 illustrates a cargo system wireless adapter with a wireless partition and a wired partition, in accordance with various embodiments.
FIGS. 5A and 5B illustrate a cargo system wireless adapter with near field communication, in accordance with various embodiments.
FIG. 6 illustrates a cargo system wireless adapter with integrated display, in accordance with various embodiments.
FIG. 7 illustrates a cargo system wireless adapter with integrated display and near field communication, in accordance with various embodiments.
FIG. 8 illustrates a cargo system wireless adapter utilized within a cargo compartment, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

In typical convertible cargo handling systems, the existence of physical cargo control panels may cause aircrafts to be carrying extra weight. That is, typical cargo control systems still include some variation of previous legacy control interfaces, for redundancy purposes, even when maturing to wireless technology.

Disclosed herein is a cargo system wireless adapter for use in controlling cargo handling systems. In various embodiments, the cargo system wireless adapter, which is brought into an aircraft by an operator, is coupled to the aircraft's cargo handling system and provides a wireless access point for the operator's controller to access the cargo handling system in order to load, unload, or maintenance, among others, the aircraft's cargo compartment. In various embodiments, once the aircraft's cargo compartment is loaded, unloaded, or maintained, the operator removes and leaves with the cargo system wireless adapter. In various embodiments, using a cargo system wireless adapter for controlling cargo handling systems provides add-on functionality, such as additional maintenance or control functionality, in addition to but not required by traditional systems.

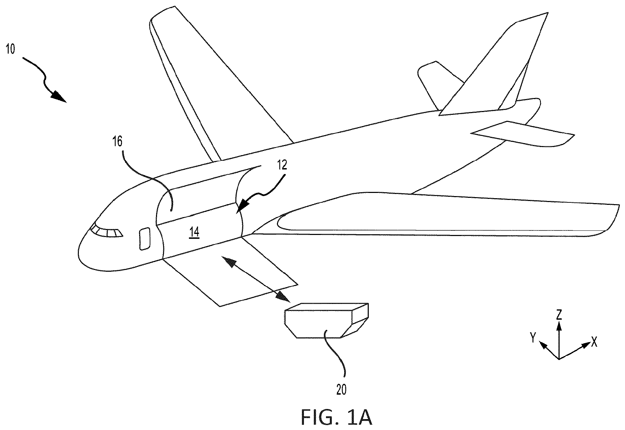

Referring now to FIG. 1A, a schematic view of an aircraft 10 having a cargo deck 12 located within a cargo compartment 14 is illustrated, in accordance with various embodiments. Aircraft 10 may comprise a cargo load door 16 located, for example, at one side of a fuselage structure of aircraft 10. A unit load device (ULD) 20, in the form of a container or pallet, for example, may be loaded through cargo load door 16 and onto cargo deck 12 of aircraft 10 or, conversely, unloaded from cargo deck 12 of aircraft 10. In general, ULDs are available in assorted sizes and capacities, and are typically standardized in dimension and shape. Once loaded with items destined for shipment, ULD 20 is transferred to aircraft 10 and then loaded onto aircraft 10 through cargo load door 16 using a conveyor ramp, scissor lift or the like. Once inside aircraft 10, ULD 20 is moved within cargo compartment 14 to a final stowed position. Multiple ULDs may be brought on-board the aircraft 10, with each ULD 20 being placed in a respective stowed position on cargo deck 12. After aircraft 10 has reached its destination, each ULD 20 is unloaded from aircraft 10 in similar fashion, but in reverse sequence to the loading procedure. To facilitate movement of ULD 20 along cargo deck 12, aircraft 10 may include a cargo handling system as described herein in accordance with various embodiments.

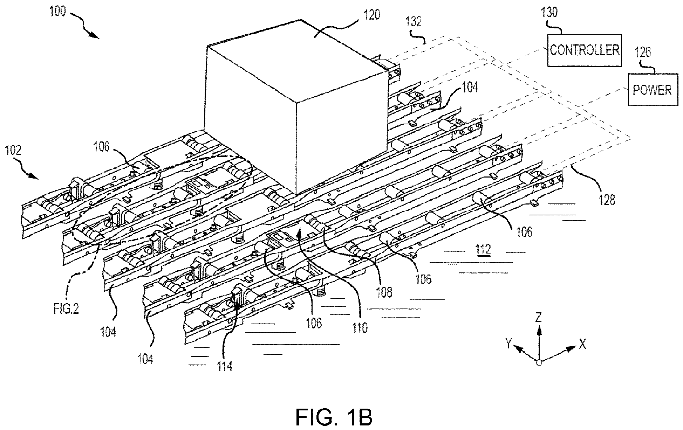

Referring now to FIG. 1B, a portion of a cargo handling system 100 is illustrated, in accordance with various embodiments. Cargo handling system 100 is illustrated with reference to an XYZ coordinate system, with the X-direction extending longitudinally aft and the Z-direction extending vertically with respect to an aircraft in which cargo handling system 100 is positioned, such as, for example, aircraft 10 described above with reference to FIG. 1A. In various embodiments, cargo handling system 100 may define a conveyance surface 102 having a plurality of trays 104 supported by a cargo deck 112, such as, for example, cargo deck 12 described above with reference to FIG. 1A. Plurality of trays 104 may be configured to support a unit load device (ULD) 120 (or a plurality of ULDs), such as, for example, unit load device (ULD) 20 described above with reference to FIG. 1A. In various embodiments, ULD 120 may comprise a container or a pallet configured to hold cargo as described above. In various embodiments, plurality of trays 104 is disposed throughout cargo deck 112 and may support a plurality of conveyance rollers 106, where one or more or all of plurality of conveyance rollers 106 is a passive roller.

In various embodiments, plurality of trays 104 may further support a plurality of power drive units (PDUs) 110, each of which may include one or more drive rollers 108 that may be actively powered by a motor. In various embodiments, one or more of plurality of trays 104 is positioned longitudinally along cargo deck 112 - e.g., along the X-direction extending from the forward end to the aft end of aircraft 10. In various embodiments, plurality of conveyance rollers 106 and one or more drive rollers 108 may be configured to facilitate transport of ULD 120 in the forward and the aft directions along conveyance surface 102. During loading and unloading, ULD 120 may variously contact the one or more drive rollers 108 to provide a motive force for transporting ULD 120 along conveyance surface 102. Each of the plurality of PDUs 110 may include an actuator, such as, for example, an electrically operated motor, configured to drive the one or more drive rollers 108 corresponding with each such PDU 110. In various embodiments, the one or more drive rollers 108 may be raised from a lowered position beneath conveyance surface 102 to an elevated position above conveyance surface 102 by the corresponding PDU 110. As used with respect to cargo handling system 100, the term "beneath" may refer to the negative Z-direction, and the term "above" may refer to the positive Z-direction with respect to conveyance surface 102. In the elevated position, the one or more drive rollers 108 variously contact and drive the ULD 120 that otherwise rides on the plurality of conveyance rollers 106. Other types of PDUs 110, which can also be used in various embodiments of the present disclosure, may include a drive roller that is held or biased in a position above conveyance surface 102 by a spring. PDUs 110 as disclosed herein may be any type of electrically powered rollers that may be selectively energized to propel or drive the ULD 120 in a desired direction over cargo deck 112 of aircraft 10. The plurality of trays 104 may further support a plurality of restraint devices 114. In various embodiments, each of the plurality of restraint devices 114 may be configured to rotate downward as ULD 120 passes over and along conveyance surface 102. Once the ULD 120 passes over any such one of the plurality of restraint devices 114, such restraint device returns to its upright position, either by a motor driven actuator or a bias member, thereby restraining or preventing the ULD 120 from translating in the opposite direction. In various embodiments, the plurality of trays 104 may further support one or more sensors, restraints, or other line replaceable units (LRUs).

In various embodiments, cargo handling system 100 may include a system controller 130 in communication with each of the plurality of PDUs 110 via a plurality of channels 132. Each of the plurality of channels 132 may be a data bus, such as, for example, a controller area network (CAN) bus. An operator may selectively control operation of the plurality of PDUs 110 using system controller 130. In various embodiments, system controller 130 may be configured to selectively activate or deactivate the plurality of PDUs 110. Thus, cargo handling system 100 may receive operator input through system controller 130 to control the plurality of PDUs 110 in order to manipulate movement of ULD 120 over conveyance surface 102 and into a desired position on cargo deck 112. In various embodiments, system controller 130 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof. Cargo handling system 100 may also include a power source 126 configured to supply power to the plurality of PDUs 110 or to the plurality of restraint devices 114 via one or more power buses 128.

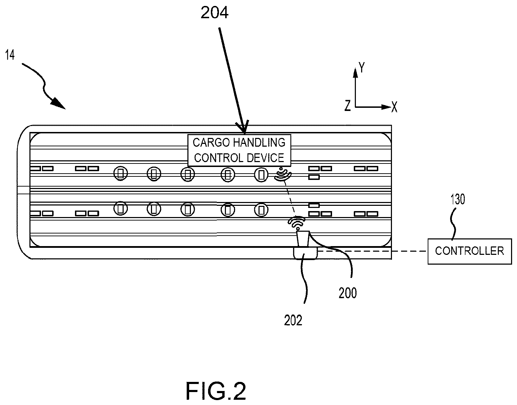

Referring to FIG. 2, a cargo system wireless adapter utilized within a cargo compartment is illustrated, in accordance with various embodiments. In various embodiments, cargo system wireless adapter 200 couples to the system controller 130 via expansion port 202 in the cargo compartment 14, during loading, unloading, or maintenance, and decouples from the system controller 130 when the aircraft is in flight. In various embodiments, once the cargo system wireless adapter 200 couples to the system controller 130 via the expansion port 202, the operator's wireless cargo handling control device 204 then couples wirelessly to the system controller 130 via the cargo system wireless adapter 200, as will be described in detail hereafter.

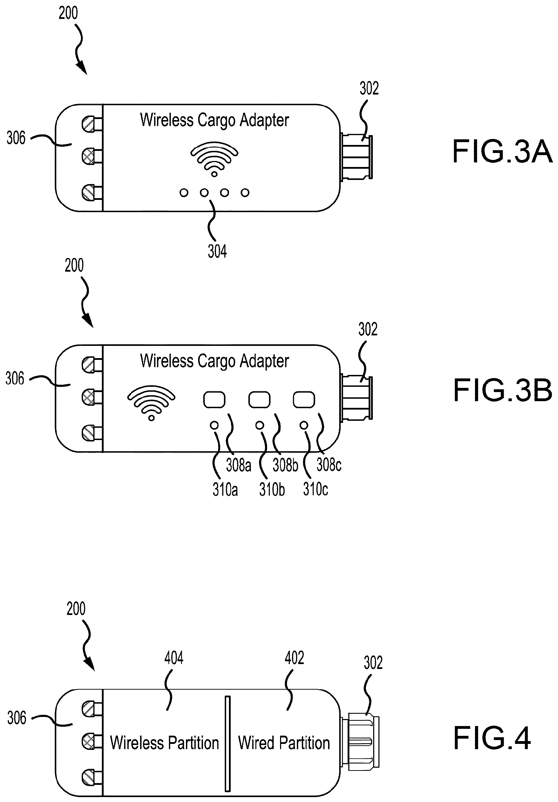

Referring to FIGS. 3A and 3B, a cargo system wireless adapter is illustrated, in accordance with various embodiments. In various embodiments, the cargo system wireless adapter 200 is a portable device that, when coupled to the aircraft's cargo handling system, such as cargo handling system 100 of FIG. 1B and, more specifically, system controller 130 of FIG. 1B, provides access, i.e. a wireless access point, between the system controller and wireless cargo handling control device 204. In various embodiments, the cargo system wireless adapter 200 is a small, light-weight device associated with a cargo loading/unloading operator or maintenance operator, among others, that the operator bring with them when moving from aircraft to aircraft. In that regard, the cargo system wireless adapter 200 is coupled to the system controller, via the expansion port, during loading, unloading, or maintenance, and decoupled from the system controller when the aircraft is in flight.

In various embodiments, the cargo system wireless adapter 200 includes an interface 302 for wirelessly interfacing with a system controller of the cargo handling system. In various embodiments, the interface 302 is a non-standard connector that plugs into a connector within the cargo compartment of the aircraft, such as cargo compartment 14 of FIG. 1A, and thus provide access to the system controller of the cargo handling system. In various embodiments, the non-standard connector is a connector that is proprietary to the cargo system wireless adapter 200 and to the aircraft so as to provide a first level of security for accessing the system controller of the cargo handling system. That is, utilizing a standard connectors, such as a universal serial bus (USB), may pose a potential security threat to the system controller of the cargo handling system as well as the aircraft. In that regard, the utilization of a non-standard connector may minimize security concerns by utilizing a connector that is uncommon, not easily obtainable, or even proprietary.

In various embodiments, not only is security of the connection of the cargo system wireless adapter 200 to the aircraft a concern but also is ensuring that the cargo system wireless adapter 200 does not fly with the aircraft. In that regard, once the cargo system wireless adapter 200 is coupled, via the expansion port, to the system controller of the cargo handling system, once the cargo system wireless adapter 200 provides unique messages and/or signals to the system controller of the cargo handling system as well as, possibly, the aircraft system, which prevents the cargo load door, such as cargo load door 16 of FIG. 1A, from being closed while the cargo system wireless adapter 200 is coupled to the aircraft. In that regard, only once the cargo system wireless adapter 200 is decoupled from the aircraft, the cargo load door close.

In various embodiments, the cargo system wireless adapter 200 may include one or more processing units. In various embodiments, the one or more processing units provide for local system peripheral handling, logical calculations, or decision making, among others. In various embodiments, the one or more processing units provide for processing wireless signals received from and transmitted to an operator's controller. In various embodiments, the one or more processing units provides for processing wired signals received from and transmitted to the system controller of the cargo handling system. In various embodiments, the cargo system wireless adapter 200 may include a set of wireless connection indicators 304 configured to indicate wireless connection status and wireless connection strength. In various embodiments, the cargo system wireless adapter 200 may include a set of system status indicators 306 configured to identify a status of the cargo system wireless adapter 200. In various embodiments, the status includes system connectivity, built-in test equipment (BITE) information, or system errors, among others. In various embodiments, the cargo system wireless adapter 200 may include a set of controls buttons 308a, 308b, 308c for controlling or initiating, powering on/off the cargo system wireless adapter 200, device pairing with the operator's wireless cargo handling control device 204, selecting status messages, among others. In various embodiments, each of the set of controls buttons 308a, 308b, 308c may have an associated indicator 310a, 310b, 310c to provide an indication of the selection of the respective one of the set of control buttons 308a, 308b, 308c.

With regard to FIG. 4, a cargo system wireless adapter with a wireless partition and a wired partition is illustrated, in accordance with various embodiments. In various embodiments, the wired partition 402 may include circuitry and/or peripherals, among other components, configured to interact with the system controller of the cargo handling system. In various embodiments, the wired partition 402 may utilize a controller area network (CAN) as a serial network communicate/translate high level information between the aircraft and wireless partition 404. In that regard, the wired partition 402 may be coupled to the system controller of the aircraft via the interface 302. In various embodiments, the wired partition 402 may be in communication with the system controller and the wireless partition 404 using signals that may include discrete signals (digital on/off interfaces).

In various embodiments, the wireless partition 404 may include circuitry and/or peripherals, among other components, to interact with wireless cargo handling control device 204, i.e. the operator's controller. In various embodiments, the wireless partition 404 may be configured to communicate via the Wireless 802.11 Standard (Wi-Fi), Bluetooth, Zigbee, Thread, or infrared spectrum requiring Line-Of-Sight communication, among others. In that regard, the wireless partition 404 may include circuitry, i.e. filters, antennas, or network processing units, among others, associated with Wi-Fi, Bluetooth, Zigbee, Thread, or infrared spectrum using Line-Of-Sight communication. In various embodiments, the wireless partition 404 may be configured to function as the wireless access point (WAP) for the operator's wireless cargo handling control device 204. In that regard, the wireless partition 404 may be configured to generate a wireless local area network (WLAN) that only allows specified (authorized) wireless cargo handling control device 204 to connect to the WLAN.

In various embodiments, the wired partition 402 and/or the wireless partition 404 may utilize separate processing units or may utilize a same or shared processing unit. In the event that the wired partition 402 and the wireless partition 404 utilize separate processing units, the two processing units may communicate together over an internal serial interface, such as Serial Peripheral Interface (SPI) or Inter-Integrated Circuit (I2C), among others.

In various embodiments, the wired partition 402 may utilize encrypted security messaging when the cargo system wireless adapter 200 is coupled to the expansion port within the aircraft. In various embodiments, this encrypted security messaging may include the use of a hardware security module (HSM) in both the cargo system wireless adapter 200 and the associated port within the aircraft. In various embodiments, these HSM components may be configured to communicate/verify specific information between the cargo system wireless adapter 200 and the system controller of the cargo handling system.

In various embodiments, the cargo system wireless adapter 200 and the system controller of the cargo handling system may utilize encryption in their communications. In that regard, only a cargo system wireless adapter 200 including an appropriate encryption key would be able to communicate with the system controller of the cargo handling system.

In various embodiments, once the cargo system wireless adapter 200 is coupled, via the expansion port, to the system controller of the cargo handling system and configured to provide a wireless access point for the operator's wireless cargo handling control device 204, the operator's wireless cargo handling control device 204 may then control loading or unloading of cargo. In various embodiments, the wireless cargo handling control device 204 may be a smart phone, tablet, or laptop, among others, running an application developed to operate with the system controller of the cargo handling system. In various embodiments, running the application developed to operate with the system controller of the cargo handling system may require specific hardware and thus, may only operate on a custom device associated with the system controller of the cargo handling system and/or the aircraft. In various embodiments, in order to run the application developed to operate with the system controller of the cargo handling system, the operator may be required to authenticate the wireless cargo handling control device 204 with the cargo system wireless adapter 200 utilizing appropriate network settings, service set identifier (SSID), or passwords, among others. In various embodiments, upon successful authentication, the operator may further utilize the application developed to operate with the system controller of the cargo handling system to interface with the system controller of the cargo handling system.

In various embodiments, the cargo system wireless adapter 200 may be configured to provide access to a web server application associated with the system controller of the cargo handling system. In that regards, the web server application, which may reside on the system controller, provides a graphical user interface that is accessible by any modern web browser. Thus, in various embodiments, after the operator has connected their device to the WLAN via the cargo system wireless adapter 200, the operator may access the web application and thus, the system controller, using a web browser to navigate to a specified uniform resource locator (URL) associated with the web server application. In that regard, once access to the web service application is established, the system controller may push software to the wireless cargo handling control device 204 to be compiled and executed on the web browser of the wireless cargo handling control device 204.

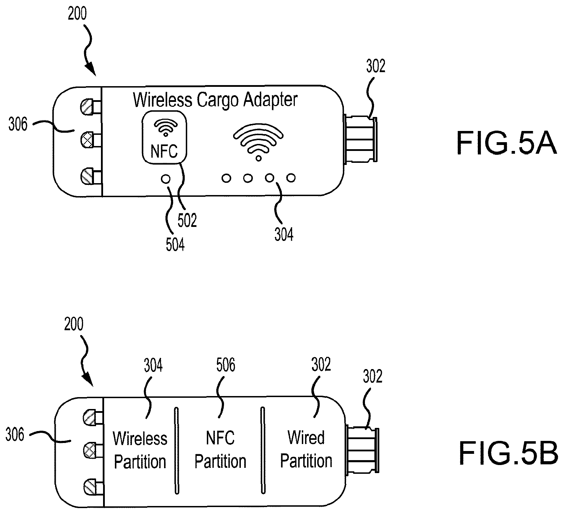

With regard to FIGS. 5A and 5B, a cargo system wireless adapter with near field communication is illustrated, in accordance with various embodiments. In various embodiments, the cargo system wireless adapter 200 may be configured with near field communication (NFC) circuitry 502. In various embodiments, the NFC circuitry 502 allows for the operator's wireless cargo handling control device 204 to pass information to and receive information from the cargo system wireless adapter 200. In that regard, when the operator's wireless cargo handling control device 204 is within range of the cargo system wireless adapter 200, NFC indicator 504 may indicate the passing and/or receiving of information between the operator's wireless cargo handling control device 204 and the cargo system wireless adapter 200. Accordingly, in various embodiments, the cargo system wireless adapter 200 includes the wired partition 402 and the wireless partition 404 previously described in FIG. 3, and an NFC partition 506 that may operate at a frequency, for example 13.5MHz, and has transmission ranges of approximately 4cm (approximately 1.575 inches) or less, thereby allowing the operator's wireless cargo handling control device 204 to communicate with the cargo system wireless adapter 200 over NFC in addition to the specified wireless communication already integrated in the wireless partition 404.

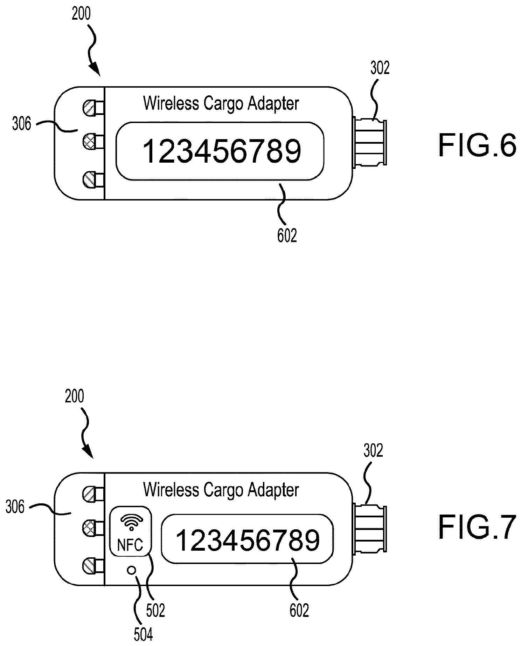

With regard to FIG. 6, a cargo system wireless adapter with integrated display is illustrated, in accordance with various embodiments. In various embodiments, display 602 may be integrated into the cargo system wireless adapter 200. In various embodiments, the display 602 may provide passcodes to the operator. In various embodiments, the passcodes may be for a network or a web application, among others. In various embodiments, the display 602 may also provide network identifiers or web URLs, among others. In various embodiments, the display 602 may display a status of the cargo system wireless adapter 200 such as system connectivity, built-in test equipment (BITE) information, or system errors, among others, in addition to or in lieu of the set of system status indicators 306.

With regard to FIG. 7, a cargo system wireless adapter with integrated display and near field communication is illustrated, in accordance with various embodiments. In various embodiments, when the operator's wireless cargo handling control device 204 is within range of the cargo system wireless adapter 200, NFC indicator 504 may indicate the passing and/or receiving of information between the operator's wireless cargo handling control device 204 and the cargo system wireless adapter 200. In various embodiments, the display 602 may provide information to the operator during or in response to the NFC, such as passcodes, network identifiers, or web URLs, among others

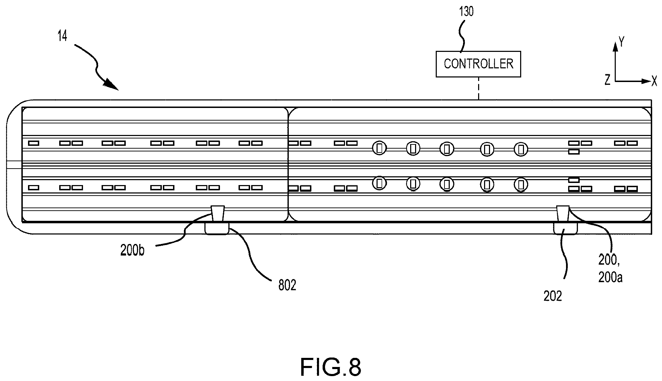

With regard to FIG. 8, a cargo system wireless adapter utilized within a cargo compartment is illustrated, in accordance with various embodiments. In various embodiments, the cargo system wireless adapter 200 couples to the system controller 130 via expansion port 202 in the cargo compartment 14, during loading, unloading, or maintenance, and decouples from the system controller when the aircraft is in flight. In various embodiments, the cargo compartment 14 may be large, such as the cargo compartment in a main deck freighter, i.e. approximately 11,884 ft³ (336 m³). In various embodiments, if the cargo compartment 14 is large, transmission lengths and signal integrity may become an issue. In such events, a first cargo system wireless adapter 200a, i.e. a first wireless adapter, couples to the system controller 130 via expansion port 202, i.e. a first expansion port, and a second cargo system wireless adapter 200b, i.e. a second wireless adapter, couples to the system controller 130 via expansion port 802, i.e. a second expansion port, in a different area of the cargo compartment 14, thus spanning the cargo compartment 14.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A cargo handling system, comprising:
a plurality of power drive units, PDUs, (110);
a system controller (130) in communication with each of the plurality of PDUs;
a wireless adapter (200) coupled to the system controller; and
a wireless cargo handling control device (204) wirelessly coupled to the system controller via the wireless adapter and configured to control each of the plurality of PDUs.

2. The cargo handling system of claim 1, wherein the wireless adapter (200) is coupled to the system controller (130) via an expansion port (202).

3. The cargo handling system of claim 2, wherein the wireless adapter utilizes a non-standard connector to couple to the expansion port and wherein the non-standard connector is proprietary.

4. The cargo handling system of any preceding claim, wherein the wireless adapter comprises a set of wireless connection indicators (304) configured to indicate wireless connection status and wireless connection strength.

5. The cargo handling system of any preceding claim, wherein the wireless adapter comprises a set of system status indicators (306) that identify at least one of system connectivity, built-in test equipment information, or system errors.

6. The cargo handling system of any preceding claim, wherein the wireless adapter comprises a wired partition (402) configured to interface with the system controller and a wireless partition (404) configured to interface with the wireless cargo handling control device.

7. The cargo handling system of any preceding claim, wherein the wireless adapter comprises near field communication, NFC, circuitry (502) configured to pass and receive information with the wireless cargo handling control device.

8. The cargo handling system of any preceding claim, wherein the wireless adapter comprises a display (602) configured to display at least one of passcodes, network identifiers, web URLs, system connectivity, built-in test equipment information, or system errors.

9. The cargo handling system of any preceding claim, wherein the wireless adapter is a first wireless adapter (200a), wherein the first wireless adapter is coupled to the system controller via a first expansion port, and wherein the cargo handling system further comprises:
a second wireless adapter (200b), wherein the second wireless adapter is coupled to the system controller via a second expansion port and wherein the wireless cargo handling control device wirelessly is coupled to the system controller via either the first wireless adapter or the second wireless adapter to control each of the plurality of PDUs.

10. The cargo handling system of any preceding claim, wherein the wireless adapter utilizes at least one of Wi-Fi, Bluetooth, Zigbee, Thread, or infrared spectrum requiring Line-Of-Sight communication.

11. An aircraft, comprising:
a cargo deck (12); and
a cargo handling system as claimed in any preceding claim disposed within the cargo deck.
